# EUROPÄISCHE PATENTANMELDUNG

(11) **EP 1 972 511 A1**
(43) Veröffentlichungstag der Anmeldung: **24.09.2008**
(21) Anmeldenummer: 07005706.2
(22) Anmeldetag: 20.03.2007
(51) Int. Cl.: B60R 25/00, G07C 9/00

(54) **Zugangskontrollsystem**

(71) Anmelder: Delphi Technologies, Inc., Troy, MI 48007 (US)
(72) Erfinder: Hildebrand, Carsten, 42115 Wuppertal (DE)
(74) Vertreter: Manitz, Finsterwald & Partner GbR

(57) **Zusammenfassung**

Bei einem Zugangskontrollsystem insbesondere für Fahrzeuge, mit einer zugangsseitigen elektronischen Steuereinrichtung, einer benutzerseitigen Identifikationseinrichtung und der zugangsseitigen elektronischen Steuereinrichtung und der benutzerseitigen Identifikationseinrichtung zugeordneten Mitteln für eine drahtlose bidirektionale Kommunikation zwischen der Steuereinrichtung und der Identifikationseinrichtung umfasst die benutzerseitige Identifikationseinrichtung Mittel, um ohne Datenaustausch mit der zugangsseitigen Steuereinrichtung und insbesondere ohne deren Mitwirkung wenigstens eine für die Bewegung und/oder die räumliche Ausrichtung der Identifikationseinrichtung repräsentative Information zu erzeugen, auf deren Basis mittels einer der Identifikationseinrichtung zugeordneten Steuer- und/oder Auswerteeinheit ohne Datenaustausch mit der zugangsseitigen Steuereinrichtung entschieden wird, ob der Zugang verwehrt wird oder nicht.

## Beschreibung

Die Erfindung betrifft ein Zugangskontrollsystem insbesondere für Fahrzeuge, mit einer zugangsseitigen elektronischen Steuereinrichtung, einer benutzerseitigen Identifikationseinrichtung und der zugangsseitigen elektronischen Steuereinrichtung und der benutzerseitigen Identifikationseinrichtung zugeordneten Mitteln für eine drahtlose bidirektionale Kommunikation zwischen der Steuereinrichtung und der Identifikationseinrichtung.

Ein solches Zugangskontrollsystem kommt beispielsweise dort zum Einsatz, wo es um die Überprüfung geht, ob eine jeweilige Person als Inhaber einer jeweiligen Identifikationseinrichtung autorisiert ist, die betreffende Zugangskontrolleinrichtung zu passieren. Dies kann sowohl für ortsfeste Zugangskontrolleinrichtungen, zu denen nur ein ausgewählter Personenkreis Zutritt hat als auch für mobile Zugangskontrolleinrichtungen, insbesondere bei Fahrzeugen, wie zum Beispiel Kraftfahrzeugen, Schiffen oder Fahrrädern, gelten. Mit den betreffenden Zugangskontrolleinrichtungen soll hier insbesondere einem Diebstahl des betreffenden Fahrzeugs entgegengewirkt werden.

Das jeweilige Zugangskontrollsystem kann insbesondere auch als sogenanntes schlüsselloses Zugangssystem und/oder schlüsselloses Startsystem für Fahrzeuge vorgesehen sein. Es umfasst in diesem Fall als zugangsseitige Steuereinrichtung ein dem Fahrzeug zugeordnetes elektronisches Steuergerät, welches in der Regel dauerhaft mit Energie versorgt ist, und wenigstens eine mobile Identifikationseinrichtung, die einen jeweiligen autorisierten Benutzer identifizieren soll. Dabei kann eine jeweilige Identifikationseinrichtung selbst Teil eines Fahrzeugschlüssels sein, der mit der Steuereinrichtung im Bereich der Schließ- und/oder Startanlage des Fahrzeugs in vorzugsweise bidirektionalem Datenaustausch steht. Die jeweiligen Identifikationseinrichtungen können insbesondere auch in Chipkarten oder dergleichen integriert und beispielsweise als Transponder ausgeführt sein. Transponder weisen keine eigene Energieversorgung auf, sie werden vielmehr bei einer Annäherung der Identifikationseinrichtung an die Steuereinrichtung drahtlos mit Energie versorgt und im weiteren automatisch zur Übertragung der Authentisierungsantwortsignale angesprochen.

Bei Zugangskontrollsystemen der eingangs genannten Art werden zunehmend auch Maßnahmen getroffen, um einer sogenannten "Relais-Attacke" zu begegnen, mit der ein nicht Berechtigter in betrügerischer Absicht versucht, beispielsweise ein Fahrzeug zu öffnen oder zu starten. Zu den bekannten Maßnahmen zur Abwehr einer solchen "Relais-Attacke" zählen die Bestimmung einer Zeitverzögerung zwischen dem ausgesandten und dem empfangenen Signal und die Bestimmung des inneren geometrischen Magnetfeldes des Fahrzeuges. Solche Maßnahmen können nun aber durch Relais-Stationen mit an das vorhandene Schutzverfahren zur Abwehr einer solchen Relais-Attacke angepassten Eigenschaften unterlaufen werden. Bei den beiden zuvor genannten bekannten Gegenmaßnahmen werden jeweils Informationen mit herangezogen, die sowohl durch die dem Fahrzeug zugeordnete Steuereinrichtung als auch durch die benutzerseitige Identifikationseinrichtung erzeugt wurden und aus der interaktiven Kommunikation zwischen diesen resultieren. Mittels einer Relais-Station ist es somit möglich, die Informationen entsprechend zu manipulieren, die für eine Entscheidung darüber herangezogen werden, ob ein Zugang gewährt wird oder nicht.

Bei einem aus der EP 1 721 792 A bekannten Zugangskontrollsystem der eingangs genannten Art basieren die Maßnahmen zum Schutz gegen eine Relais-Attacke auf der Erfassung der Unterschiede zwischen dem innerhalb eines betreffenden Fahrzeugs und dem außerhalb des Fahrzeugs gegebenen Ultraschallfeld. Die Entscheidung darüber, ob die Kommunikation zwischen der zugangsseitigen Steuereinrichtung und der benutzerseitigen Identifikationseinrichtung in betrügerischer Absicht durch eine Relais-Station manipuliert wurde oder nicht, erfolgt durch die dem Fahrzeug zugeordnete Steuereinrichtung. Nachdem diese bekannte Schutzmaßnahme gegen eine Relais-Attacke einen Informationsaustausch zwischen der Identifikationseinrichtung und der zugangs- bzw. fahrzeugseitigen Steuereinrichtung voraussetzt, besteht die Gefahr, dass die Kommunikation zwischen der Identifikationseinrichtung und der fahrzeugseitigen Steuereinrichtung durch eine Relais-Station manipuliert wird, um einen unberechtigten Zugang zum Fahrzeug bzw. Start des Fahrzeugs zu bewirken.

Der Erfindung liegt die Aufgabe zugrunde, ein verbessertes Zugangskontrollsystem der eingangs genannten Art zu schaffen, das eine größtmögliche Sicherheit gegen eine betrügerische Relais-Attacke gewährleistet.

Diese Aufgabe wird erfindungsgemäß dadurch gelöst, dass die benutzerseitige Identifikationseinrichtung Mittel umfasst, um ohne Datenaustausch mit der zugangsseitigen Steuereinrichtung und insbesondere ohne deren Mitwirkung wenigstens eine für die Bewegung und/oder die räumliche Ausrichtung der Identifikationseinrichtung repräsentative Information zu erzeugen, auf deren Basis mittels einer der Identifikationseinrichtung zugeordneten Steuer- und/oder Auswerteeinheit ohne Datenaustausch mit der zugangsseitigen Steuereinrichtung entschieden wird, ob der Zugang verwehrt wird oder nicht.

Aufgrund dieser Ausbildung ist das Zugangskontrollsystem äußerst zuverlässig gegen eine unerlaubte Relais-Attacke gesichert. Nachdem eine solche Relais-Attacke auf der Basis von Informationen erkannt wird, die innerhalb der benutzerseitigen Identifikationseinrichtung ohne Interaktion mit der zugangsseitigen Steuereinrichtung erzeugt werden, ist ausgeschlossen, dass eine Relais-Station Informationen manipuliert, die für die Entscheidung herangezogen werden, ob ein Zugang gewährt wird oder nicht.

Bevorzugt umfassen die Mittel zur Erzeugung der für die Bewegung und/oder räumliche Ausrichtung der Identifikationseinrichtung repräsentativen Information wenigstens einen Beschleunigungssensor und/oder wenigstens einen Magnetfeldsensor.

Von Vorteil ist insbesondere, wenn mittels der der Identifikationseinrichtung zugeordneten Steuer- und/oder Auswerteeinheit der Zugang verwehrt wird, wenn sich die Identifikationseinrichtung nicht über eine vorgebbare Zeitdauer in eine bestimmte Richtung bewegt hat.

Bevorzugt tritt in dem Fall, dass der Zugang verwehrt wird, die Identifikationseinrichtung nicht mit der zugangsseitigen Steuereinrichtung in Verbindung.

Bei einer vorteilhaften alternativen Ausführungsform des erfindungsgemäßen Zugangskontrollsystems sendet die Identifikationseinrichtung in dem Fall, dass der Zugang verwehrt wird, eine entsprechende Störmeldung an die zugangsseitige Informationseinheit.

Eine bevorzugte praktische Ausführungsform zeichnet sich dadurch aus, dass die für die Bewegung und/oder die räumliche Ausrichtung der Identifikationseinrichtung repräsentative Information insbesondere in Kombination mit gemessenen Magnetfeldwerten von der Identifikationseinrichtung zugeordneten Antennen und/oder mit der erfassten Phasendifferenz einer gemessenen Entfernung zwischen der Identifikationseinrichtung und der zugangsseitigen Steuereinrichtung zur Erzeugung eines Informationsmusters herangezogen wird, das mit einem Referenzinformationsmuster verglichen wird.

Dabei erfolgen die Erzeugung des Informationsmusters und der Vergleich mit dem Referenzinformationsmuster vorteilhafterweise mittels der der Identifikationseinrichtung zugeordneten Steuer- und/oder Auswerteeinheit.

Das Referenzinformationsmuster kann insbesondere einem zuvor gespeicherten Informationsmuster für eine typische Zugangssituation entsprechen.

Dabei kann die typische Zugangssituation zumindest im Wesentlichen insbesondere durch eine während einer vorgebbaren Dauer erfolgende Bewegung der Identifikationseinrichtung in eine typische Richtung bestimmt sein.

Für die drahtlose bidirektionale Kommunikation können der zugangsseitigen Steuereinrichtung und der Identifikationseinrichtung insbesondere Sende- und Empfangseinheiten einschließlich Antennen, vorzugsweise Ferrit-Antennen, zugeordnet sein.

Die Erfindung bietet somit einen zuverlässigen Schutz gegen sogenannte Relais-Attacken bei Zugangskontrollsystemen, die insbesondere als sogenannte schlüssellose Zugangssysteme und/oder schlüssellose Startsysteme für Fahrzeuge vorgesehen sein können. Dabei wird eine jeweilige Relais-Attacke auf der Basis von Informationen erfasst, die innerhalb der benutzerseitigen Identifikationseinrichtung ohne Interaktion mit der zugangs- bzw. fahrzeugseitigen Steuereinrichtung erzeugt werden. Damit ist ausgeschlossen, dass mittels einer Relais-Station Informationen manipuliert werden, die dafür herangezogen werden, zu entscheiden, ob der Zugang zum Fahrzeug bzw. der Start des Fahrzeugs gewährt wird oder nicht.

Die innerhalb der benutzerseitigen Identifikationseinrichtung erzeugten Informationen können auf der Basis verschiedener den Zustand der Identifikationseinrichtung in Bezug auf die Umgebung repräsentierender Signale wie zum Beispiel die Bewegung oder die räumliche Ausrichtung der Identifikationseinrichtung erstellt werden. So muss sich die vom Benutzer getragene Identifikationseinrichtung beispielsweise über eine bestimmte Zeitdauer in eine bestimmte Richtung bewegen. Die resultierenden Parameter bzw. Informationen der Identifikationseinrichtung, insbesondere kombiniert mit Magnetfeldwerten der Ferrit-Antennen oder einer Phasendifferenz der Abstandsmessung, können zur Erzeugung eines charakteristischen Musters herangezogen werden, das die Kriterien einer Zugangs- bzw. Starthandlung erfüllen.

Liegt die Identifikationseinrichtung beispielsweise auf einem Tisch irgendeines Restaurants und versucht ein Dieb mittels einer Relais-Attacke in ein Fahrzeug einzudringen, so mag die Identifikationseinrichtung zwar alle für eine gültige Authentifikation erforderlichen Informationen über den erweiterten Datenkommunikationskanal erhalten. Da die Identifikationseinrichtung jedoch auf dem Tisch liegt und sich entsprechend nicht bewegt, würde der Zugang zum Fahrzeug jedoch verwehrt werden. Um Zugang zu dem Fahrzeug zu erhalten, muss die benutzerseitige Identifikationseinrichtung sich bewegen und das in dieser Identifikationseinrichtung erzeugte Informationsmuster beispielsweise mit einem gespeicherten Bewegungsmuster übereinstimmen, das z.B. während einer typischen Zugangssituation erzeugt wurde. Die betreffenden Informationen können nicht mittels einer Relais-Station übertragen oder erzeugt werden, wodurch das Fahrzeug zuverlässig gegen eine entsprechende Relais-Attacke geschützt ist.

Dabei kann die benutzerseitige Identifikationseinrichtung insbesondere mit wenigstens einem Beschleunigungssensor und/oder mit wenigstens einem Magnetfeldsensor versehen sein. Während der Beschleunigungssensor die Bewegung der benutzerseitigen Identifikationseinrichtung misst, wird über den Magnetfeldsensor die die räumliche Ausrichtung der Identifikationseinrichtung betreffende Information bestimmt. Die betreffenden Daten werden durch die benutzerseitige Identifikationseinrichtung erzeugt, wodurch eine Manipulation durch eine Relais-Station ausgeschlossen ist.

Es wird davon ausgegangen, dass die Bewegung der benutzerseitigen Identifikationseinrichtung während des Eindringens oder Startens und Schließens des Fahrzeugs verschiedene Muster für jeden dieser Vorgänge oder ein Muster für all diese Vorgänge erzeugt. Dieses definierte Muster wird für einen Vergleich mit der aktuell gemessenen Bewegungscharakteristik im Fall einer Startauslösung oder einer Öffnungs/ Schließ-Handlung herangezogen.

Beide oben beschriebenen Charakteristika können mit verschiedenen Charakteristika wie beispielsweise Magnetfeldwerten, Phasenverschiebungs-Messwerten oder spezifischen Parametern anderer Anwendungen kombiniert werden, die zu eine komplexere und kundenspezifische schlüssellose Lösung eines Schutzes gegen eine Relais-Attacke führen.

Mit der Erfindung wird ein hohes Sicherheitsniveau für beispielsweise verschiedene schlüssellose Komfort-Fahrzeuganwendungen erreicht. Es ist auch möglich, einen jeweiligen zusätzlichen Beschleunigungs- und Magnetfeldsensor nachzurüsten, wie beispielsweise auch eine Maus-Funktion für das Navigationssystem oder ein Kompass-Modul, wobei es bezüglich des Schutzes gegenüber einer Relais-Attacke insbesondere auch denkbar ist, dass der Benutzer das betreffende zusätzliche Merkmal abgesehen von dem höheren Sicherheitsstandard nicht unmittelbar wahrnimmt.

Bei der erfindungsgemäßen Lösung entscheidet also die benutzerseitige Identifikationseinrichtung ohne Datenaustausch mit beispielsweise dem Fahrzeug, ob Zugang zu dem Fahrzeug gewährt oder ein solcher Zugang verwehrt wird. Für diese Entscheidung erfolgt eine Überwachung der Bewegung der benutzerseitigen Identifikationseinrichtung. Im Fall einer fehlenden Übereinstimmung mit einem typischen Eindring- bzw. Zugangs- oder Startbewegungsmuster wird der Zugang zum Fahrzeug verwehrt.

Von einer solchen fehlenden Übereinstimmung ist beispielsweise dann auszugehen, wenn die Identifikationseinrichtung beispielsweise in einem Restaurant oder zuhause bewegungslos auf einen Tisch oder dergleichen liegt. Versucht nun in einem solchen Fall ein Unberechtigter über eine Relais-Station die Identifikationseinrichtung auszulösen, so mag die Kommunikation und Authentifikation über den erweiterten künstlichen Kommunikationskanal erfolgen, wobei die betreffende Manipulation zunächst weder von der Identifikationseinrichtung noch von der beispielsweise einem Fahrzeug zugeordneten Steuereinrichtung festgestellt wird. Der Inhalt der Informationen könnte auch so modifiziert werden, dass ein bestimmtes Ultraschall-Umfeld für die Gewährung eines Zugangs simuliert wird. Unter Einbeziehung des Bewegungsmusters wird der Zugang durch die Identifikationseinrichtung nun aber zumindest in einem solchen Fall verwehrt, dass die Identifikationseinrichtung bewegungslos auf einem Tisch oder dergleichen liegt. Der Zugang wird erst dann gewährt, wenn sich die Identifikationseinrichtung in einem vorgegebenen Muster bewegt.

## Patentansprüche

1. Zugangskontrollsystem insbesondere für Fahrzeuge, mit einer zugangsseitigen elektronischen Steuereinrichtung, einer benutzerseitigen Identifikationseinrichtung und der zugangsseitigen elektronischen Steuereinrichtung und der benutzerseitigen Identifikationseinrichtung zugeordneten Mitteln für eine drahtlose bidirektionale Kommunikation zwischen der Steuereinrichtung und der Identifikationseinrichtung,
**dadurch gekennzeichnet,**
**dass** die benutzerseitige Identifikationseinrichtung Mittel umfasst, um ohne Datenaustausch mit der zugangsseitigen Steuereinrichtung und insbesondere ohne deren Mitwirkung wenigstens eine für die Bewegung und/oder die räumliche Ausrichtung der Identifikationseinrichtung repräsentative Information zu erzeugen, auf deren Basis mittels einer der Identifikationseinrichtung zugeordneten Steuer- und/oder Auswerteeinheit ohne Datenaustausch mit der zugangsseitigen Steuereinrichtung entschieden wird, ob der Zugang verwehrt wird oder nicht.

2. Zugangskontrollsystem nach Anspruch 1,
**dadurch gekennzeichnet,**
**dass** die Mittel zur Erzeugung der für die Bewegung und/oder räumliche Ausrichtung der Identifikationseinrichtung repräsentativen Information wenigstens einen Beschleunigungssensor und/oder wenigstens einen Magnetfeldsensor umfassen.

3. Zugangskontrollsystem nach Anspruch 1 oder 2,
**dadurch gekennzeichnet,**
**dass** mittels der der Identifikationseinrichtung zugeordneten Steuer- und/oder Auswerteeinheit der Zugang verwehrt wird, wenn sich die Identifikationseinrichtung nicht über eine vorgebbare Zeitdauer in eine bestimmte Richtung bewegt hat.

4. Zugangskontrollsystem nach Anspruch 3,
**dadurch gekennzeichnet,**
**dass** in dem Fall, dass der Zugang verwehrt wird, die Identifikationseinrichtung nicht mit der zugangsseitigen Steuereinrichtung in Verbindung tritt.

5. Zugangskontrollsystem nach Anspruch 3,
**dadurch gekennzeichnet,**
**dass** in dem Fall, dass der Zugang verwehrt wird, die Identifikationseinrichtung eine entsprechende Störmeldung an die zugangsseitige Informationseinheit sendet.

6. Zugangskontrollsystem nach einem der vorhergehenden Ansprüche,
**dadurch gekennzeichnet,**
**dass** die für die Bewegung und/oder die räumliche Ausrichtung der Identifikationseinrichtung repräsentative Information insbesondere in Kombination mit gemessenen Magnetfeldwerten von der Identifikationseinrichtung zugeordneten Antennen und/oder mit der erfassten Phasendifferenz einer gemessenen Entfernung zwischen der Identifikationseinrichtung und der zugangsseitigen Steuereinrichtung zur Erzeugung eines Informationsmusters herangezogen wird, das mit einem Referenzinformationsmuster verglichen wird.

7. Zugangskontrollsystem nach Anspruch 6,
**dadurch gekennzeichnet,**
**dass** die Erzeugung des Informationsmusters und der Vergleich mit dem Referenzinformationsmuster mittels der der Identifikationseinrichtung zugeordneten Steuer- und/oder Auswerteeinheit erfolgen.

8. Zugangskontrollsystem nach Anspruch 6 oder 7,
**dadurch gekennzeichnet,**
**dass** das Referenzinformationsmuster einem zuvor gespeicherten Informationsmuster für eine typische Zugangssituation entspricht.

9. Zugangskontrollsystem nach Anspruch 8,
**dadurch gekennzeichnet,**
**dass** die typische Zugangssituation zumindest im Wesentlichen durch eine während einer vorgebbaren Dauer erfolgende Bewegung der Identifikationseinrichtung in eine typische Richtung bestimmt ist.

10. Zugangskontrollsystem nach einem der vorhergehenden Ansprüche,
**dadurch gekennzeichnet,**
**dass** der zugangsseitigen Steuereinrichtung und der Identifikationseinrichtung Sende- und Empfangseinheiten einschließlich Antennen für die drahtlose bidirektionale Kommunikation zugeordnet sind.

11. Zugangskontrollsystem nach Anspruch 10,
**dadurch gekennzeichnet ,**
**dass** die Antennen zumindest teilweise durch Ferrit-Antennen gebildet sind.
